# EUROPEAN PATENT SPECIFICATION

(11) **EP 3 650 405 B1**
(45) Date of publication and mention of the grant of the patent: **25.08.2021**
(21) Application number: 19208212.1
(22) Date of filing: 11.04.2018
(51) Int. Cl.: B67D 1/14, B67D 1/12, G05D 16/10

(54) **REMOTE REGULATOR PRESSURE ADJUSTMENT TOOL AND METHOD USING THE SAME**
WERKZEUG ZUR FERNREGLER-DRUCKEINSTELLUNG UND VERFAHREN ZU IHRER VERWENDUNG
OUTIL DE RÉGLAGE DE PRESSION DE RÉGULATEUR À DISTANCE ET SON PROCÉDÉ D'UTILISATION

(30) Priority: 14.04.2017 US 201715488319
(43) Date of publication of application: 13.05.2020
(62) Divisional of application: 18722298.9
(73) Proprietor: Legacy US, LLC, Menlo Park, California 94025 (US)
(72) Inventor: DALTON, Jeffrey Travis, Glenview, IL Illinois 60025 (US); MCCARTHY, Joseph K., Glenview, IL Illinois 60025 (US); COSTLE, Carey, Glenview, IL Illinois 60025 (US)
(74) Representative: Birdi, Sandeep Singh

(56) References cited:
- WO-A1-2010/124036
- WO-A1-2016/112323
- US-A- 2 020 492
- US-A- 4 011 971

## Description

### Technology Field

Applicants' disclosure relates to an apparatus for testing and adjusting a remote pressure regulator disclosed in the U.S. Non-Provisional Patent Application No. 14/990,673 and a method to utilize that apparatus.

### Background

When handled properly from brewery to bar to glass, draught beer delivers what many consider to be the freshest, most flavorful beer available to the customer. But the job does not end once the keg is tapped and the beer begins to flow. Good beer quality depends on proper setting of a pour pressure, i.e. the pressure extant within the beer keg itself.

Using prior art assemblies, a plurality of beer kegs receive pressurized CO₂ gas from a single, high pressure source. A source regulator is often interconnected to the output end of the CO₂ source, wherein that source regulator reduces the source pressure from 68.9/6.89 Pa [hundreds/thousands of psi] to a line pressure of about 241.3-344.7 kPa [35 - 50 psi]. That same line pressure is utilized to dispense a plurality of differing beers from a corresponding plurality of individual beer kegs. Document WO2016/112323A1 discloses a a pressure regulator assembly comprising: a pressure regulator comprising a first housing, a first spring moveably disposed within said first housing, and comprising a first end and a second end; an adjuster cap disposed in said first housing and in physical contact with said first end of said first spring; a pressure regulator adjustment tool. Further pressure regulating assemblies are known from US2020492A and US4011971A.

### Summary

The current disclosure is directed to a remote regulator adjustment tool that can be used to adjust an output pressure of a remote pressure regulator. In certain embodiments, that remote regulator is removeably attached to a keg coupler. In certain embodiments, the remote regulator pressure adjustment tool comprises a second housing formed to include a first bore extending therethrough, an adjuster piston movably disposed within the first bore, and an adjustment knob interconnected to the adjustor piston. Further, the adjustor piston contains a threaded aperture extending inwardly from a proximal end thereof. A plurality of alignments keys are disposed on a distal end of the adjustor piston. In addition, the adjustment knob is attached to a threaded shaft extending outwardly from the adjustor piston, wherein the threading on the threaded shaft mates with the threading form in the threaded aperture. When the adjustment knob is rotated in a first direction, the adjustor piston moves downwardly in the first bore. When the adjustment knob is rotated in a second, and opposite direction, the adjustor piston moves upwardly in the first bore.

The remote regulator comprises an adjustor cap in contact with an adjustment spring. When that adjustment spring is compressed, the output pressure of an attached regulator increases. When the spring is elongated, the output pressure of an attached regulator decreases.

The adjustor cap is formed to include a plurality of key slots, wherein the alignment keys on the adjuster piston releaseably insert into those key slots formed in the adjuster cap. When the adjustment knob disposed in the pressure adjustment tool is rotated in a first direction, an adjustment spring in the remote regulator is compressed, and the output pressure of the remote regulator increases. When the adjustment knob disposed in the pressure adjustment tool is rotated in a second and opposite direction, an adjustment spring in the remote regulator is elongated, and the output pressure of the remote regulator decreases.

In certain embodiments, the remote regulator adjustment tool comprises a pressure gauge. The pressure gauge is in fluid communication with the first bore. Therefore, the pressure gauge can measure the dispense pressure of a remote regulator. For purposes of this application, the output pressure of the remote regulator may be referred to as a "dispense pressure" and/or a "pour pressure."

Further, in certain embodiments, the remote regulator adjustment tool comprises a pressure release assembly, which includes a third housing formed to include a threaded end and a second bore extending therethrough, a second spring disposed within the second bore, a gasket disposed over a distal end of the second bore, a push rod extending through said gasket and in physical contact with the second spring, and a button attached to a distal end of the push rod. This pressure release assembly maintains pressure within the adjustment tool when the button is disposed in a first position, and releases pressure from the adjustment tool when the button is disposed in a second position.

### Brief Description of the Drawings

The invention will be better understood from a reading of the following detailed description taken in conjunction with the drawings in which like reference designators are used to designate like elements, and in which:
FIG. 1A illustrates a side view of a remote regulator adjustment tool 100;
FIG. 1B is a cross-sectional view illustrating components comprising the remote regulator adjustment tool 100 in FIG. 1A;
FIG. 2A shows a remote regulator 200 in combination with a hex nut 310;
FIG. 2B is a cross-sectional view illustrating components comprising the remote regulator adjustment tool 100 and a remote regulator 200;
FIG. 2C illustrates one embodiment of the disposition of a pressure relief assembly 140;
FIG. 2D is a cross-sectional view illustrating components comprising the embodiment of the remote regulator adjustment tool 100 in FIG. 2C;
FIG. 3A is an exploded view of one embodiment of the remote regulator adjustment tool 100;
FIG. 3B is an exploded view of another embodiment of the remote regulator adjustment tool 100;
FIG. 4A illustrates one embodiment of Applicants' remote regulator 200;
FIG. 4B is a cross-sectional view illustrating components comprising Applicants' remote regulator 200;
FIG. 5A is an exploded view of the remote regulator 200;
FIG. 5B illustrates a top view of a adjustor cap 500 of the remote regulator 200;
FIG. 5C is a top view of the adjustor cap 500;
FIG. 6 illustrates a prior art keg coupler 300;
FIG. 7 illustrates the components comprising keg coupler 300;
FIG. 8 illustrates keg coupler 300 releaseably attached to a beer keg 400;
FIG. 9A illustrates a hex nut and tail piece components of keg coupler 300;
FIG. 9B illustrates hex nut 310 separately;
FIG. 9C illustrates tail piece 320 separately;
FIG. 10 illustrates Applicants' keg coupler 1000;
FIG. 11 illustrates Applicants' remote regulator in combination with Applicants' adjustment tool comprising an integral controller 1200;
FIG. 12 illustrates controller 1200;
FIG. 13 illustrates Applicants' remote regulator in combination with Applicants' adjustment tool comprising a Schrader valve attachment stage; and
FIG. 14 illustrates Applicants' regulator 1400 which comprises a Schrader valve in fluid communication with a regulator output stage.

### Detailed Description of the Preferred Embodiments

Applicants' disclosure is described in preferred embodiments in the following description with reference to the Figures, in which like numbers represent the same or similar elements. Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

The described features, structures, or characteristics of the invention may be combined in any suitable manner in one or more embodiments. In the following description, numerous specific details are recited to provide a thorough understanding of embodiments of the invention. One skilled in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

As a general matter, CO₂ gas is supplied in a variety of cylinder sizes ranging from about 7.43 m³ [30 pounds] to about 37.1 m³ [150 pounds] and containing about 2.5 [10] to about 14.9 m³ [60 pounds] of gas, respectively. The pressure in such cylinders ranges from about 5171.1 kPa [750 PSIG] at 295.3 K [72F] to about 12410.6 kPa [1800 PSIG] at about 323.2 K [122F]. A source regulator attached to the CO₂ cylinder reduces the output pressure to an intermediate pressure of about 137.9 kPa [20 PSIG] to about 241.3 kPa [35 PSIG]. Applicants' remote regulator described herein receives CO₂ gas having a pressure of about 137.9-241.3 kPa [20-35 PSIG] from a primary regulator, and reduces that pressure to about 34.5-124.1 kPa [5-18 PSIG]. Individual dispense pressures are recommended for various brands / types of draught beer plus altitude, temperature, and system length require additional push pressure.

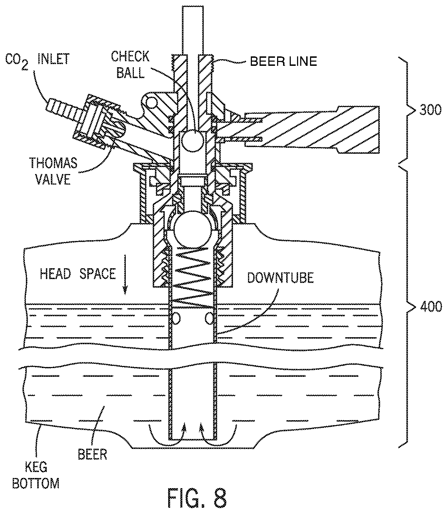

Referring now to FIG. 8, gas flows in and beer flows out of a keg through a coupler 300. While this device has many casual names in beer cellars around the country, the industry adopted the term "coupler" as the standard term for the device.

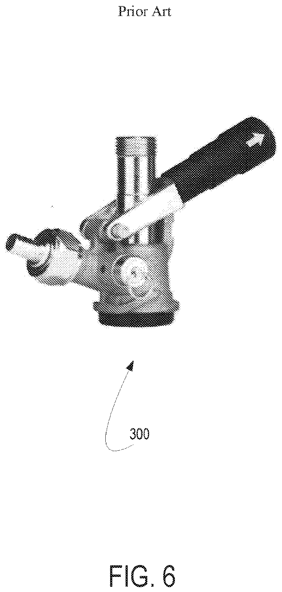

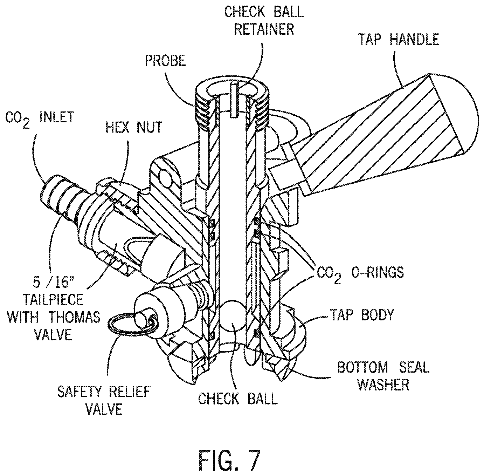

Most U.S. breweries use a Sankey "D" coupler. FIG. 6 illustrates a Sankey "D" coupler. FIG. 7 illustrates a cut-away view of a Sankey "D" coupler thereby illustrating the components therein. FIG. 8 illustrates a Sankey "D" coupler releaseably mounted on a beer keg.

Kegs are pressurized vessels. Nearly all modem kegs use some form of Sankey valve and stem. There are two main types of Sankey valves and corresponding keg necks: "drop-in," and threaded. Drop-in Sankey valves are held in place by a lock ring or circlip. The lock ring and valve should never be removed in the field. Very rarely a lock ring can fail, possibly loosening the valve, creating a potentially dangerous situation. Threaded Sankey valves screw into the neck of the keg.

When a coupler is attached to a keg to tap it, a probe on the bottom depresses a ball or poppet in the key valve, allowing CO₂ or mixed gas to enter the keg thereby applying pressure to the beer. This forces the beer to travel up the down tube (spear) and drive the beer to the faucet. The coupler is attached to a jumper or a beer line (FIG. 8).

Couplers include one of two types of one-way valves, namely a Thomas valve and/or a check valve. A Thomas valve allows CO₂ to flow into the keg but prevents the beer from backing up into the gas line if gas pressure drops. This protects the gas regulators from damage. When the coupler is disconnected from the keg, a check valve prevents beer from the beer line flowing out through the coupler. This prevents beer spillage in keg tapping areas.

In certain embodiments, keg coupler 300 further comprises an integral pressure relief valve. If excessive gas pressure were applied to a keg, this valve would open to prevent damage to the keg and coupler. The valve can also be opened manually, and this should be done periodically to test the safety relief valve. The manual release usually looks like a small metal pin fitted with a wire ring. To test the valve, pull on the ring to slide the pin a short distance out of the coupler and release a small amount of gas.

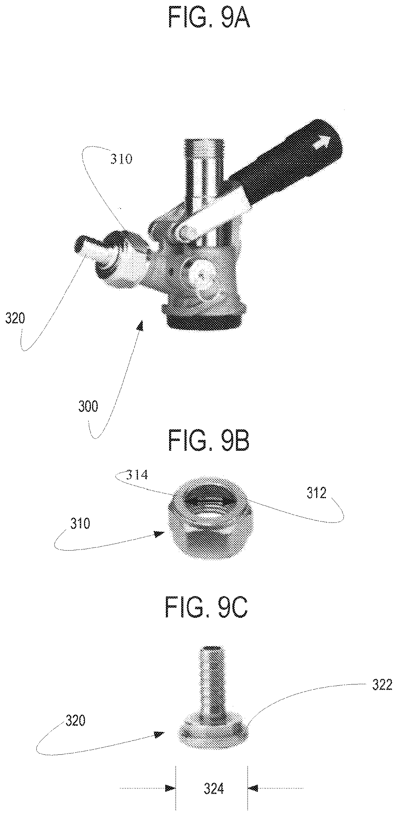

FIG. 9A illustrates Sankey "D" coupler 300 comprising a tail piece 320 and a hex nut 310. FIG. 9B illustrates hex nut 310. Hex nut 310 is formed to include a threaded aperture (internal threading) 316 extending therethrough. Hex nut 310 further comprises a second annular lip 312 extending inwardly into threaded aperture 316. The hex nut aperture comprises a diameter 314 at the second annular lip 312.

FIG. 9C illustrates tail piece 320. Tail piece 320 comprises an annular base 322. Annular base comprises a diameter 324. Diameter 324 is greater than diameter 314 of second annular lip 312 on hex nut 310 (FIG. 9B).

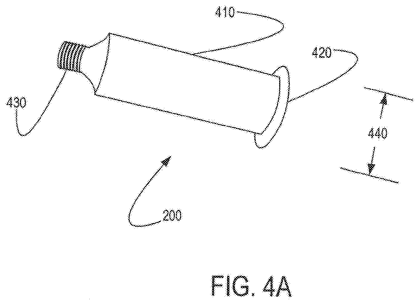

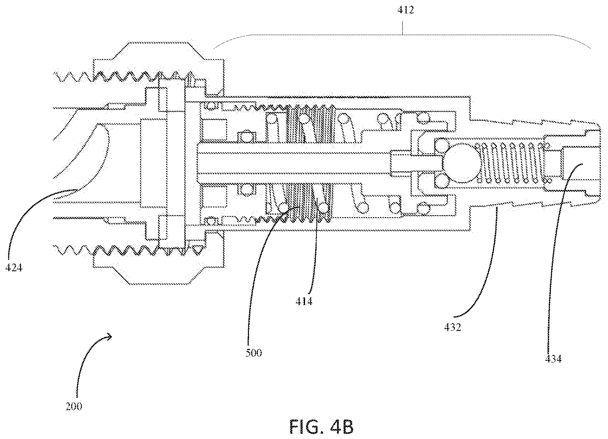

FIG. 4A illustrates one embodiment of Applicants' remote regulator 200. In the illustrated embodiment of FIG. 4, remote regulator 200 comprises a first housing 410 and an integral tail piece 430.

In the illustrated embodiment of FIG. 4A, Applicants' remote regulator 200 further comprises an annular lip 420 on a proximal end and an integral tail piece 430 on a distal end. In certain embodiments, annular lip 420 comprises a diameter 440, wherein diameter 440 is greater than diameter 314 of second annular lip 312 on hex nut 310 (FIG. 9B).

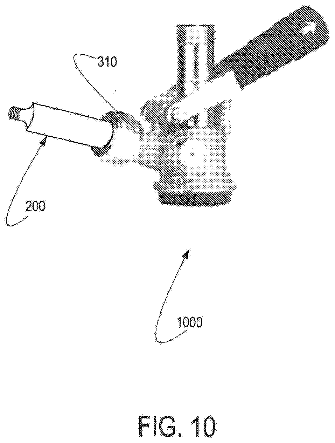

FIG. 10 illustrates Applicants' keg coupler 1000 which includes Applicants' remote regulator 200 releaseably attached to Sankey "D" keg coupler. Referring now to FIGS. 4A, 4B, 9A, 9B, 9C, and 10, hex nut 310 is removed from prior art Sankey keg coupler 300, and tail piece 320 is removed from hex nut 310. The distal end of Applicants' remote regulator is inserted into and through hex nut 310 until annular lip 420 is in contact with second annular lip 312. Hex nut 310 is then releaseably attached to Sankey keg coupler 300 to give Applicants' keg coupler 1000 (FIG. 10).

FIG. 4B illustrates one embodiment of Applicants' remote regulator 200. Regulator 200 comprises distal portion 412 which includes integral tail piece 432. Distal portion 412 comprises an input section for Applicants' remote regulator 200. Portion 434 comprises a high pressure area in regulator 200.

Adjustment spring 414 determines the regulated output pressure in portion 424. This regulated output pressure corresponds to the "pour pressure" set for that remote regulator. When adjustment spring 414 is compressed, the regulated output pressure in portion 424 increases; when adjustment spring 414 is elongated, the regulated output pressure in portion 424 decreases.

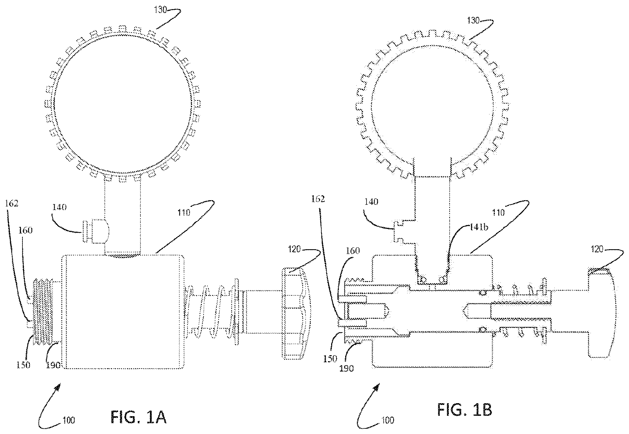

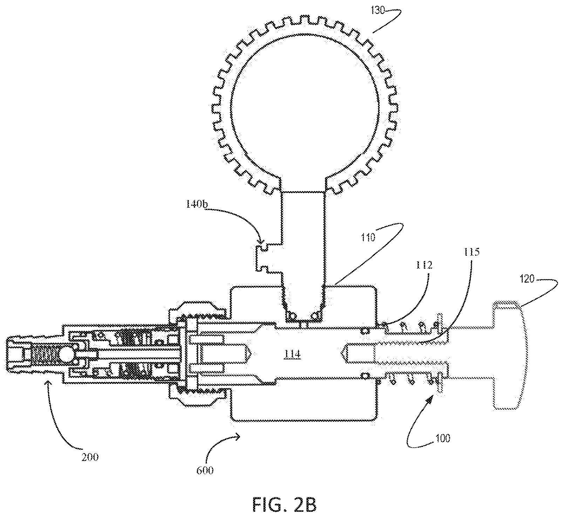

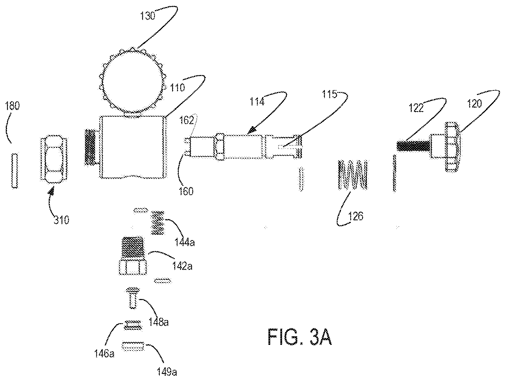

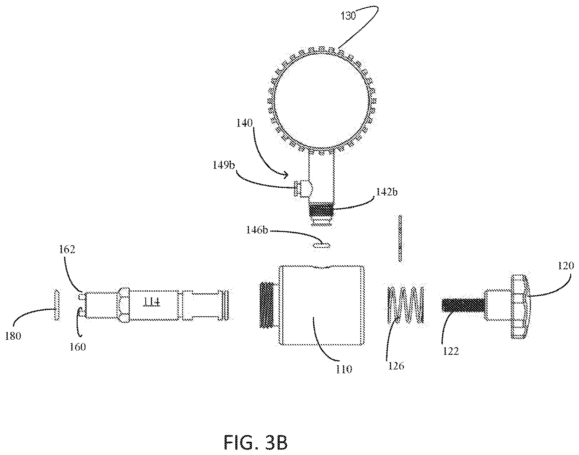

FIGS. 1A, 1B, 3A, and 3B illustrate embodiments of Applicants remote regulator adjustment tool 100, which is used to test and adjust the pour pressure of remote regulator 200. FIG. 2B illustrates assembly 600 which comprises Applicants' remote regulator 200 releaseably attached to Applicants' remote regulator adjustment tool 100.

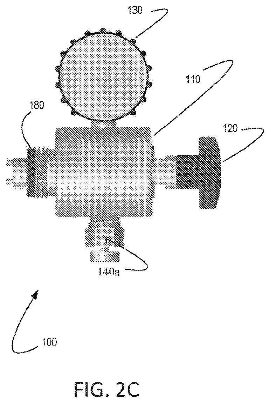

The remote regulator adjustment tool 100 comprises an adjustor piston 114, a second housing 110, the adjustor piston 114 moveably disposed within the second housing 110, a pressure relief assembly 140, and a pressure gauge 130. Additionally, a distal end 190 (FIGS. 1A and 1B) of second housing 110 comprises a threaded connector 150 (FIGS. 1A and 1B) to attach to Applicants' remote regulator. To ensure an air-tight attachment between the remote regulator adjustment tool and the remote regulator, a gasket 180 (FIGS. 2C and 3A) is disposed at distal end 190 of the second housing.

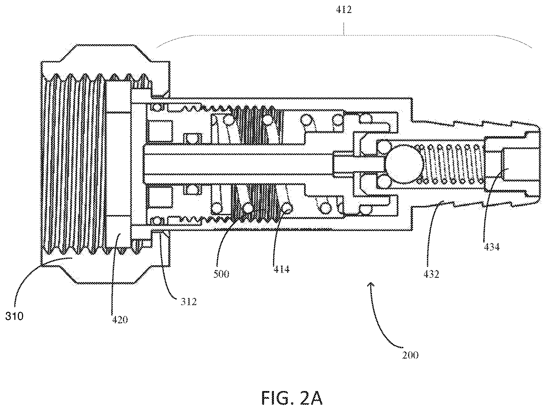

FIG. 2B illustrates remote regulator adjustment tool 100 releaseably attached to Applicants' remote regulator 200. Hex nut 310 (FIGS. 2A, 9B) is used to attach remote regulator 200 to remote regulator adjustment tool 100. Referring now to FIGS. 2A, 2B, and 9B, distal end of Applicants' remote regulator 200 is inserted into and through hex nut 310 until annular lip 420 is in contact with second annular lip 312. Hex nut 310 is then releaseably attached to threading 150 formed on distal end (threaded second end) 190 of remote regulator adjustment tool 100, such that threaded portion 150 of Applicants' remote regulator adjustment tool 100 meshes with the threaded aperture 316 (FIG. 9B) defining the aperture extending through hex nut 310.

A first bore 112 extends therethrough second housing 110 and adjustor piston 114 is movably disposed within first bore 112. Further, adjustor piston 114 is formed to include a threaded aperture extending inwardly from a proximal end thereof and an adjustment knob 120 is attached to a distal end of threaded shaft 122 (FIGS. 3A and 3B). Threaded shaft 122 (FIG. 3A) meshes with a threaded aperture 115 (FIGS. 2B and 3A) formed within the adjustor piston. Alignment keys 160 and 162 (FIGS. 1A, 1B, 3A, and 3B) are disposed on distal end of adjustor piston 114.

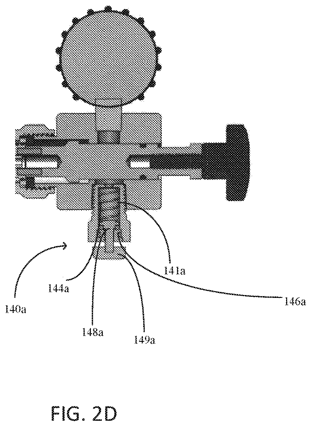

In certain embodiments, the pressure relief assembly 140 is located on an opposite side of the pressure gauge 130 (FIGS. 2C, 2D and 3A). In other embodiments, the pressure relief assembly 140 is located on the same side of the pressure gauge 130 (FIGS. 1A, 1B, 2B and 3B). Now, referring to FIG. 2D, the pressure relief assembly 140a, located on the opposite side of the pressure gauge 130, comprises a third housing 141a formed to include a threaded end and a third bore 142a (FIG. 3A) therethrough. Gasket 146a is disposed over a distal end of third bore 142a. Push rod 148a extends though gasket 146a, and physically contacts a second spring 144a. Button 149a is attached to push rod 148a. Pushing button 149a releases pressure within the remote regulator adjustment tool. Pressure gauge 130 measures pressure when the remote regulator adjustment tool alone, or when the remote regulator adjustment tool in combination with Applicants' remote regulator is connected to a source of pressurized gas.

Further, referring to FIG. 3B, the pressure relief assembly 140, located on the same side of the pressure gauge 130, comprises a third housing 141b (FIG. 1B) formed to include a threaded end and a second bore 142b (FIG. 3B) therethrough. Gasket 146b is disposed over a distal end of second bore 142b. Pushing button 149b releases pressure within the remote regulator adjustment tool.

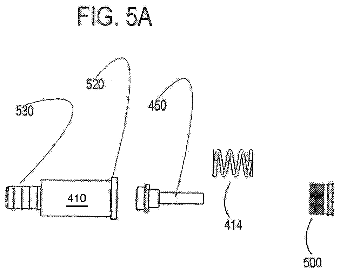

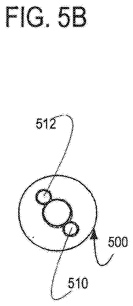

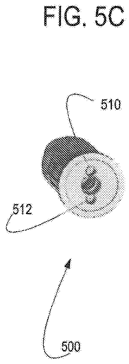

Referring now to FIGS. 5A, 5B, and 5C, Applicants' remote regulator 200 comprises an adjustor cap 500, which is formed to include key slots 510 and 512. Further, key slots 510 and 512 are configured so that alignment keys 160 and 162 (FIGS. 1A and 1B) can be removeably inserted therein. In the illustrated embodiment of FIG. 2B, when remote regulator 200 is releaseably attached to remote regulator adjustment tool 100, alignment keys 160 and 162 are removeably inserted into key slots 510 and 512. After the alignment keys are disposed in the key slots, the pour pressure can be adjusted by rotating the adjustment knob 120. Rather, a distal end of threaded shaft 122 (FIGS. 3A and 3B) is attached to motor 1120. Assembly 1100 further comprises controller 1200. Controller 1200 operates motor 1120.

After adjusting the pour pressure, buttons 149a and 149b can be depressed to release the pressure within adjustment tool 100. After closing the pressure relief assemblies 140 and 140a by allowing button 149a and 149b to return to its initial configuration, the adjusted pressure can be read from pressure gauge 130. If the adjusted pressure differs from a desired pressure, adjustment knob 120 can be rotated clock-wise or counter clock-wise in small increments until the desired pour pressure is reached. In certain embodiments, rotating the adjustment knob 120 in small increments allows finite and gradual adjustment of the desired pour pressure. This feature is suitable for pouring many different beverages, which have different desired pour pressures. For example, an ideal range of pour pressure for wine is about 27.6 to 34.5 kPa [4 to 5 psi]; an ideal range of pour pressure for beer is about 68.9-103.4 kPa [10-15 psi]; an ideal range of pour pressure for beer (low draw) is about 137.9 to 172.4 kPa [20 to 25 psi]; and an ideal range of pour pressure for nitro is about 206.8 to 241.3 kPa [30 to 35 psi]. The examples are not limiting and a user is able to rotate the adjustment knob 120 to reach any desired pour pressure.

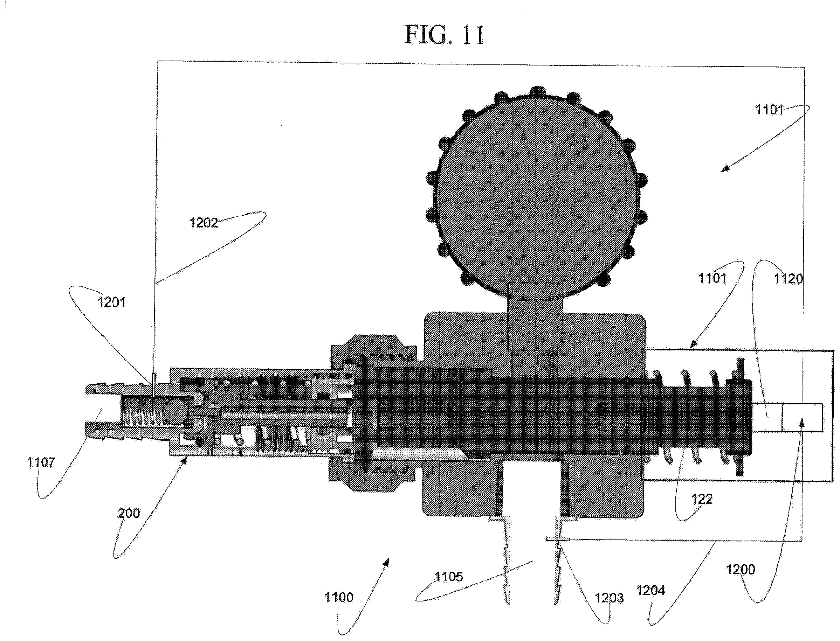

Referring now to FIG. 11, assembly 1100 comprises regulator 200 in combination with a modified adjustment tool 1101. Adjustment tool 1100 differs from adjustment tool 100 in that pressure relief assembly 140 is replaced by output portion 1105. Pressurized gas from a primary regulator enters assembly 1100 at input end 1107. That one-time reduced-pressure gas first travels through regulator 200, where gas pressure is again reduced.

Assembly 1100 further comprises a second housing 1110. Assembly 1101 does not comprise adjustment knob 120 (FIGS. 3A and 3B). Rather, a distal end of threaded shaft 122 is attached to motor 1120. Assembly 1100 further comprises controller 1200. Controller 1200 operates motor 1120.

When motor 1120 causes threaded shaft 122 to rotate in a first direction, the adjustment spring 414 (FIGS. 2A and 4B) in the attached regulator 200 is compressed, and the output pressure in output portion 1105 of assembly 1100 increases. When motor 1120 causes threaded shaft 122 to rotate in a second and opposite direction, the adjustment spring 414 (FIGS. 2A and 4B) in the attached regulator 200 is elongated, and the output pressure in output portion 1105 of assembly 1100 decreases.

Assembly 1100 further comprises a first pressure sensor 1201 in input potion 1107. Communication link 1202 interconnects first pressure sensor 1201 and controller 1200. Assembly 1100 further comprises a second pressure sensor 1203 in output potion 1 105. Communication link 1204 interconnects second pressure sensor 1203 and controller 1200.

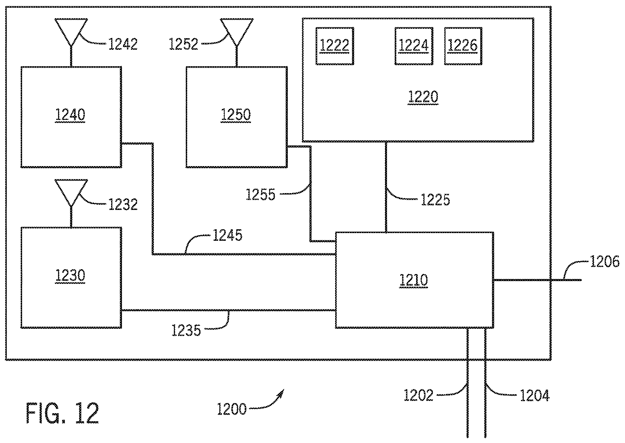

Referring now to FIG. 12, controller 1200 comprises processor 1210, memory 1220 interconnected with processor 1210 via communication link 1225, optional Blue Tooth module 1230 interconnected with processor 1210 via communication link 1235, optional RFID module 1240 interconnected with processor 1210 via communication link 1245, and optional "WI-FI" module 1250 interconnected with processor 1210 via communication link 1255.

In the illustrated embodiment of FIG. 12, microcode 1222, instructions 1224, and database 1226, are encoded in memory 1220. In certain embodiments, memory 1220 comprises nonvolatile memory. In certain embodiments, memory 1220 comprises battery backed up RAM, a magnetic hard disk assembly, an optical disk assembly, and/or electronic memory. By "electronic memory," Applicants mean a PROM, EPROM, EEPROM, SMARTMEDIA, FLASHMEDIA, and the like.

Processor 1210 uses microcode 1222 to operate controller 1230. Processor 1210 uses microcode 1222, instructions 1224, and database 1226, to operate Blue Tooth module 1230, RFID module 1240, WI-FI module 1250, motor 1120, and pressure sensors 1201 and 1203.

A desired output pressure in output stage 1105 (FIG. 11) is encoded in database 1226. Controller 1200 continuously monitors the incoming pressure using pressure sensor 1201, and output pressure using sensor 1203. If a measured output pressure is greater than the encoded desired output pressure, then controller 1200 causes motor 1120 to cause threaded shaft 122 to move outwardly, while continuously monitoring the output pressure. If a measured output pressure is less than the encoded desired output pressure, then controller 1200 causes motor 1120 to cause threaded shaft to move inwardly, while continuously monitoring the output pressure. When the measured output pressure equals the desired output pressure, then controller does not cause motor 1110 to rotate threaded shaft 122 in either direction.

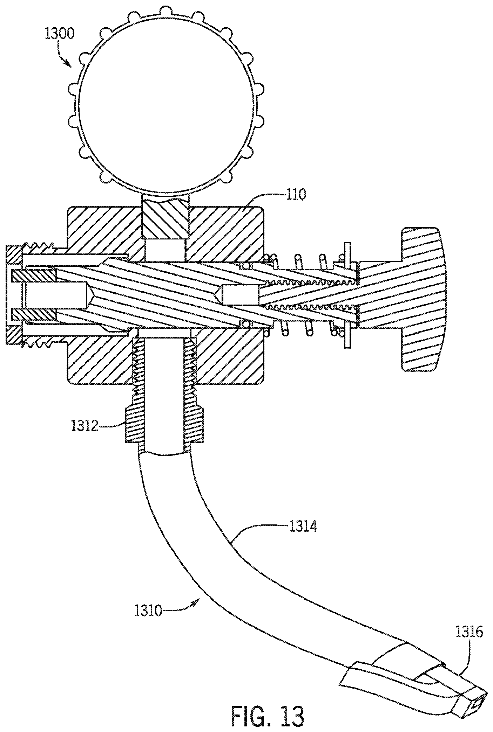

Referring now to FIG. 13, assembly 1300 is a modification of adjustment tool 100 (FIG. 2C). In assembly 1300, the pressure relief assembly 140a of adjustment tool 100 is replaced with assembly 1310. Assembly 1310 comprises a threaded coupler 1312 which can be releaseably attached to second housing 110 after removing pressure relief assembly 140a. Assembly 1310 further comprises a flexible tube 1314 and a Schrader valve attachment 1316.

By removing pressure relief assembly 140a, and replacing that assembly 140a with an assembly 1310, assembly 1300 can be used as a pressure gauge to check the air pressure within any device comprising a Schrader valve, including without limitation, bicycle tires, automobile tires, and the like.

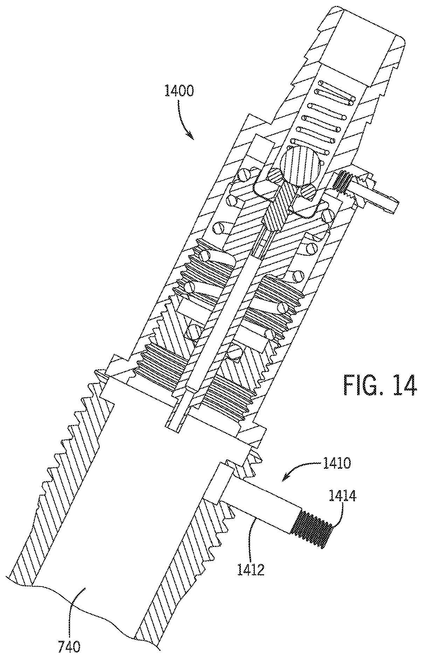

Referring now to FIG. 14, regulator 1400 comprises the features of regulator 200 (FIG. 2A) in combination with Schrader valve assembly 1410 which is in fluid communication with low pressure, output stage 740. Assembly 1400 comprises a tubular member 1412 and threaded end 1414. A pressure gauge can be releaseably attached to threaded end 1414 to monitor the pressure within regulator 1400 which regulator 1400 remains in place and in operation.

While the preferred embodiments of the present invention have been illustrated in detail, it should be apparent that modifications and adaptations to those embodiments may occur to one skilled in the art without departing from the scope of the appended claims.

## Claims

1. An assembly (600), comprising:
a pressure regulator (200) comprising a first housing (410),
an adjustment spring (414) moveably disposed within said first housing and comprising a first end and a second end; and
an adjuster cap (500) for adjusting an output pressure of the pressure regulator, said adjuster cap disposed in said first housing and in physical contact with said first end of said adjustment spring;
wherein said adjuster cap is formed to include a plurality of key slots (510,512) therein;
a pressure regulator adjustment tool (100) comprising a second housing (110) formed to include a first bore (112) extending therethrough, a rotatable adjuster piston (114) moveably disposed within said first bore, wherein said adjuster piston comprises a plurality of alignment keys (160,162) disposed on a distal end thereof, wherein each of said plurality of alignment keys is removeably disposed within a different one of said plurality of key slots, wherein:
said adjuster piston is attached to a rotatable adjustment knob (120);
rotating said adjustment knob in a first direction causes said adjuster piston to rotate and move downwardly in said bore that causes said adjustment spring to compress and increase the output pressure of the pressure regulator; and
rotating said adjustment knob in a second and opposite direction causes said adjuster piston to rotate and move upwardly in said bore that causes said adjustment spring to elongate and decrease the output pressure of the pressure regulator.

2. The assembly of claim 1, wherein:
said first housing (410) comprises an integral tail piece (432) disposed on an input end (1107);
said first housing comprises a first annular lip (420) disposed on an output end;
said adjustment knob (120) is attached to a threaded shaft (122) which extends outwardly from a first end of said second housing (110);
said second housing comprises a threaded second end (190); and
a hex nut (310) comprising internal threading (316) and a second annular lip (312), wherein said first housing extends through said hex nut such that said first annular lip contacts said second annular lip; and
wherein said threaded second end interconnects with said internal threading of said hex nut.

3. The assembly of claim 1, said pressure regulator adjustment tool (100) further comprising a pressure gauge (130), wherein said pressure gauge is in fluid communication with said first bore (112).

4. The assembly of claim 3, said pressure regulator adjustment tool (100) further comprising a pressure relief assembly (140) having a first orientation wherein pressure is maintained within said pressure regulator adjustment tool and a second orientation wherein pressure is released from said pressure regulator adjustment tool.

5. The assembly of claim 4, wherein said pressure relief assembly further comprises:
a third housing (141a) formed to include a threaded end and a second bore (142a) therethrough;
a second spring (144a) disposed within said second bore,
a gasket (146a) disposed over a distal end of said second bore; and
a push rod (148a) extending through said gasket and in physical contact with said second spring, and a button (149a) attached to a distal end of said push rod, wherein said button can be moved inwardly to release pressure from said pressure regulator adjustment tool (100).

6. A method to adjust an output pressure of a remote pressure regulator (200), comprising:
providing a remote pressure regulator (200) comprising an adjustment spring (414) to set an output pressure, a threaded adjuster cap (500) in physical contact with a distal end of said adjustment spring, wherein said adjuster cap is formed to include a plurality of key slots (510,512) therein;
releasably attaching to said remote pressure regulator a pressure regulator adjustment tool (100) comprising a pressure gauge (130), a rotatable adjustment knob (120), and a moveable and rotatable adjustor piston (114) comprising a plurality of alignment keys (160,162) disposed on a distal end thereof, wherein said rotatable adjustment knob is coupled to said moveable and rotatable adjuster piston, and wherein each of said plurality of alignment keys is removeably disposed within a different one of said plurality of key slots;
attaching a pressurized gas input source to a tailpiece (432) of said remote pressure regulator;
observing an indicated output pressure of said remote pressure regulator using said pressure gauge;
rotating said adjustment knob in a first direction that causes said adjustment spring to compress and increase said indicated output pressure; and
rotating said adjustment knob in a second and opposite direction that causes said adjustment spring to elongate and decrease said indicated output pressure.

7. The method of claim 6, wherein said pressure regulator adjustment tool (100) comprises a second housing (110) formed to include a first bore (112) extending therethrough, wherein said pressure gauge (130) is in fluid communication with said first bore.

8. The method of claim 7, wherein said pressure regulator adjustment tool (100) further comprises a pressure relief assembly (140).

9. The method of claim 8, wherein said pressure relief assembly (140) further comprises,
a third housing (141a) formed to include a threaded end and a second bore (142a) therethrough; a second spring (144a) disposed within said second bore,
a gasket (146a) disposed over a distal end of said second bore;
a push rod (148a) extending through said gasket and in physical contact with said second spring; and
a button (149a) attached to a distal end of said push rod, wherein said button can be moved inwardly to release pressure from said pressure regulator adjustment tool (100).

10. The method of claim 7, wherein:
said adjuster piston (114) is formed to include a threaded aperture (115) extending inwardly from a proximal end thereof;
said adjustment knob (120) further comprises a threaded shaft extending outwardly therefrom;
said threaded shaft (122) mates with said threaded aperture;
rotating said adjustment knob in a first direction causes said adjuster piston to rotate and move downwardly in said first bore (112) and compressing said adjustment spring in said remote pressure regulator (200); and
rotating said adjustment knob in a second and opposite direction causes said adjuster piston to move upwardly in said first bore and elongate said adjustment spring in said remote pressure regulator.

11. The method of claim 6, comprising gradually rotating the adjustment knob (120) in the first direction to gradually increase the indicated output pressure.

12. The method of claim 6, comprising gradually rotating the adjustment knob (120) in the second and opposite direction to gradually decrease the indicated output pressure.

## Patentansprüche

1. Anordnung (600), umfassend:
einen Druckregler (200), umfassend ein erstes Gehäuse (410),
eine Einstellfeder (414), die in dem ersten Gehäuse bewegbar angeordnet ist und ein erstes Ende und ein zweites Ende umfasst; und
eine Einstellkappe (500) zum Einstellen eines Ausgangsdrucks des Druckreglers, wobei die Einstellkappe in dem ersten Gehäuse und in physischem Kontakt mit dem ersten Ende der Einstellfeder angeordnet ist;
wobei die Einstellkappe so ausgebildet ist, dass sie eine Vielzahl von Keilnuten (510, 512) darin aufweist;
ein Druckregler-Einstellwerkzeug (100), umfassend ein zweites Gehäuse (110), das so ausgebildet ist, dass es eine erste Bohrung (112) einschließt, die sich durch dieses hindurch erstreckt, einen drehbaren Einstellkolben (114), der bewegbar in der ersten Bohrung angeordnet ist, wobei der Einstellkolben eine Vielzahl von Ausrichtungskeilen (160, 162) umfasst, die an einem distalen Ende davon angeordnet sind, wobei jeder der Vielzahl von Ausrichtungskeilen entfernbar in einer anderen der Vielzahl von Keilnuten angeordnet ist, wobei:
der Einstellkolben an einem drehbaren Einstellknopf (120) angebracht ist;
Drehen des Einstellknopfs in eine erste Richtung bewirkt, dass sich der Einstellkolben dreht und in der Bohrung nach unten bewegt, was bewirkt, dass die Einstellfeder zusammengedrückt und der Ausgangsdruck des Druckreglers erhöht wird; und
Drehen des Einstellknopfs in eine zweite und entgegengesetzte Richtung bewirkt, dass sich der Einstellkolben dreht und in der Bohrung nach oben bewegt, was bewirkt, dass die Einstellfeder gelängt wird und den Ausgangsdruck des Druckreglers verringert.

2. Anordnung nach Anspruch 1, wobei:
das erste Gehäuse (410) ein integrales Endstück (432) umfasst, das an einem Eingangsende (1107) angeordnet ist;
das erste Gehäuse eine an einem Ausgangsende angeordnete erste Ringlippe (420) umfasst;
der Einstellknopf (120) an einem Gewindeschaft (122) angebracht ist, der sich von einem ersten Ende des zweiten Gehäuses (110) nach außen erstreckt;
das zweite Gehäuse ein zweites Gewindeende (190) umfasst; und
eine Sechskantmutter (310) ein Innengewinde (316) und eine zweite Ringlippe (312) umfasst, wobei sich das erste Gehäuse durch die Sechskantmutter erstreckt, so dass die erste Ringlippe die zweite Ringlippe berührt; und
wobei das zweite Gewindeende mit dem Innengewinde der Sechskantmutter verbunden ist.

3. Anordnung nach Anspruch 1, wobei das Druckregler-Einstellwerkzeug (100) ferner einen Druckmesser (130) umfasst, wobei der Druckmesser in Fluidverbindung mit der ersten Bohrung (112) steht.

4. Anordnung nach Anspruch 3, wobei das Druckregler-Einstellwerkzeug (100) ferner eine Druckentlastungsanordnung (140) umfasst, die eine erste Orientierung, in der Druck in dem Druckregler-Einstellwerkzeug aufrechterhalten wird, und eine zweite Orientierung aufweist, in der das Druckregler-Einstellwerkzeug druckentlastet ist.

5. Anordnung nach Anspruch 4, wobei die Druckentlastungsanordnung ferner umfasst:
ein drittes Gehäuse (141a), das so ausgebildet ist, dass es ein Gewindeende und eine zweite Bohrung (142a) durch dieses hindurch einschließt;
eine zweite Feder (144a), die innerhalb der zweiten Bohrung angeordnet ist,
eine Dichtung (146a), die über einem distalen Ende der zweiten Bohrung angeordnet ist; und
eine Schubstange (148a), die sich durch die Dichtung erstreckt und in physischem Kontakt mit der zweiten Feder steht, und einen Knopf (149a), der an einem distalen Ende der Schubstange angebracht ist, wobei der Knopf nach innen bewegt werden kann, um das Druckregler-Einstellwerkzeug (100) von Druck zu entlasten.

6. Verfahren zum Einstellen eines Ausgangsdrucks eines Ferndruckreglers (200), umfassend: Bereitstellen eines Ferndruckreglers (200), umfassend eine Einstellfeder (414) zum Einstellen eines Ausgangsdrucks, eine schraubbare Einstellkappe (500) in physischem Kontakt mit einem distalen Ende der Einstellfeder, wobei die Einstellkappe so ausgebildet ist, dass sie eine Vielzahl von Keilnuten (510, 512) darin aufweist;
lösbares Anbringen, an den Ferndruckregler, eines Druckregler-Einstellwerkzeugs (100), das einen Druckmesser (130), einen drehbaren Einstellknopf (120) und einen beweglichen und drehbaren Einstellkolben (114) umfasst, der eine Vielzahl von Ausrichtungskeilen (160, 162) umfasst, die an einem distalen Ende davon angeordnet sind, wobei der drehbare Einstellknopf mit dem beweglichen und drehbaren Einstellkolben gekoppelt ist und wobei jeder der Vielzahl von Ausrichtungskeilen entfernbar in einer anderen der Vielzahl von Keilnuten angeordnet ist;
Anbringen einer Druckgaseingangsquelle an einem Endstück (432) des Ferndruckreglers;
Beobachten eines angezeigten Ausgangsdrucks des Ferndruckreglers unter Verwendung des Druckmessers;
Drehen des Einstellknopfs in einer ersten Richtung, was bewirkt, dass die Einstellfeder zusammengedrückt wird und den angezeigten Ausgangsdruck erhöht; und
Drehen des Einstellknopfs in einer zweiten und entgegengesetzten Richtung, was bewirkt, dass die Einstellfeder gelängt wird und den angezeigten Ausgangsdruck verringert.

7. Verfahren nach Anspruch 6, wobei das Druckregler-Einstellwerkzeug (100) ein zweites Gehäuse (110) umfasst, das so ausgebildet ist, dass es eine erste Bohrung (112) aufweist, die sich durch dieses hindurch erstreckt, wobei der Druckmesser (130) in Fluidverbindung mit der ersten Bohrung steht.

8. Verfahren nach Anspruch 7, wobei das Druckregler-Einstellwerkzeug (100) ferner eine Druckentlastungsanordnung (140) umfasst.

9. Verfahren nach Anspruch 8, wobei die Druckentlastungsanordnung (140) ferner umfasst:
ein drittes Gehäuse (141a), das so ausgebildet ist, dass es ein Gewindeende und eine zweite Bohrung (142a) durch dieses hindurch einschließt; eine zweite Feder (144a), die innerhalb der zweiten Bohrung angeordnet ist,
eine Dichtung (146a), die über einem distalen Ende der zweiten Bohrung angeordnet ist;
eine Schubstange (148a), die sich durch die Dichtung und in physischem Kontakt mit der zweiten Feder erstreckt; und
einen Knopf (149a), der an einem distalen Ende der Schubstange angebracht ist, wobei der Knopf nach innen bewegt werden kann, um das Druckregler-Einstellwerkzeug (100) von Druck zu entlasten.

10. Verfahren nach Anspruch 7, wobei:
der Einstellkolben (114) so ausgebildet ist, dass er eine Gewindeöffnung (115) aufweist, die sich von einem proximalen Ende davon nach innen erstreckt;
der Einstellknopf (120) ferner einen Gewindeschaft umfasst, der sich davon nach außen erstreckt;
der Gewindeschaft (122) zur Gewindeöffnung passt;
Drehen des Einstellknopfs in eine erste Richtung bewirkt, dass sich der Einstellkolben dreht und sich in der ersten Bohrung (112) nach unten bewegt und die Einstellfeder in dem Ferndruckregler (200) zusammendrückt; und
Drehen des Einstellknopfs in eine zweite und entgegengesetzte Richtung bewirkt, dass sich der Einstellkolben in der ersten Bohrung nach oben bewegt und die Einstellfeder in dem Ferndruckregler längt.

11. Verfahren nach Anspruch 6, umfassend das allmähliche Drehen des Einstellknopfs (120) in der ersten Richtung, um den angezeigten Ausgangsdruck allmählich zu erhöhen.

12. Verfahren nach Anspruch 6, umfassend das allmähliche Drehen des Einstellknopfs (120) in die zweite und entgegengesetzte Richtung, um den angezeigten Ausgangsdruck allmählich zu verringern.

## Revendications

1. Ensemble (600), comprenant :
un régulateur de pression (200) comprenant un premier logement (410),
un ressort d'ajustement (414) disposé de façon mobile au sein dudit premier logement et comprenant une première extrémité et une deuxième extrémité ; et
une coiffe d'ajustement (500) pour ajuster une pression de sortie du régulateur de pression, ladite coiffe d'ajustement disposée dans ledit premier logement et en contact physique avec ladite première extrémité dudit ressort d'ajustement ;
dans lequel ladite coiffe d'ajustement est formée pour inclure une pluralité de logements de clavette (510, 512) en son sein ;
un outil d'ajustement de régulateur de pression (100) comprenant un deuxième logement (110) formé pour inclure un premier alésage (112) s'étendant à travers celui-ci, un piston d'ajustement rotatif (114) disposé de façon mobile au sein dudit premier alésage, dans lequel ledit piston d'ajustement comprend une pluralité de clavettes d'alignement (160, 162) disposées sur une extrémité distale de celui-ci, dans lequel chacune parmi ladite pluralité de clavettes d'alignement est disposée de façon amovible au sein d'un différent parmi ladite pluralité de logements de clavette, dans lequel :
ledit piston d'ajustement est fixé à une molette d'ajustement rotative (120) ;
une rotation de ladite molette d'ajustement dans une première direction amène ledit piston d'ajustement à tourner et à se déplacer vers le bas dans ledit alésage ce qui amène ledit ressort d'ajustement à se comprimer et à augmenter la pression de sortie du régulateur de pression ; et
une rotation de ladite molette d'ajustement dans une deuxième direction opposée amène ledit piston d'ajustement à tourner et à se déplacer vers le haut dans ledit alésage ce qui amène ledit ressort d'ajustement à s'allonger et à diminuer la pression de sortie du régulateur de pression.

2. Ensemble selon la revendication 1, dans lequel :
ledit premier logement (410) comprend pièce de queue d'un seul tenant (432) disposée sur une extrémité d'entrée (1107) ;
ledit premier logement comprend une première lèvre annulaire (420) disposée sur une extrémité de sortie ;
ladite molette d'ajustement (120) est fixée à une tige filetée (122) qui s'étend vers l'extérieur à partir d'une première extrémité dudit deuxième logement (110) ;
ledit deuxième logement comprend une deuxième extrémité filetée (190) ; et
un écrou hexagonal (310) comprenant un filetage interne (316) et une deuxième lèvre annulaire (312), dans lequel ledit premier logement s'étend à travers ledit écrou hexagonal de telle sorte que ladite première lèvre annulaire vient en contact avec ladite deuxième lèvre annulaire ; et
dans lequel ladite deuxième extrémité filetée s'interconnecte avec ledit filetage interne dudit écrou hexagonal.

3. Ensemble selon la revendication 1, ledit outil d'ajustement de régulateur de pression (100) comprenant en outre un manomètre (130), dans lequel ledit manomètre est en communication fluidique avec ledit premier alésage (112).

4. Ensemble selon la revendication 3, ledit outil d'ajustement de régulateur de pression (100) comprenant en outre un ensemble de relâchement de pression (140) ayant une première orientation dans laquelle la pression est maintenue au sein dudit outil d'ajustement de régulateur de pression et une deuxième orientation dans laquelle la pression est relâchée dudit outil d'ajustement de régulateur de pression.

5. Ensemble selon la revendication 4, dans lequel ledit ensemble de relâchement de pression comprend en outre :
un troisième logement (141a) formé pour inclure une extrémité filetée et un deuxième alésage (142a) à travers celui-ci ;
un deuxième ressort (144a) disposé au sein dudit deuxième alésage,
un joint statique (146a) disposé par-dessus une extrémité distale dudit deuxième alésage ; et
une tige poussoir (148a) s'étendant à travers ledit joint statique et en contact physique avec ledit deuxième ressort, et un bouton (149a) fixé à une extrémité distale de ladite tige poussoir, dans lequel ledit bouton peut être déplacé vers l'intérieur pour relâcher la pression dudit outil d'ajustement de régulateur de pression (100).

6. Procédé pour ajuster une pression de sortie d'un régulateur de pression distant (200), comprenant : la fourniture d'un régulateur de pression distant (200) comprenant un ressort d'ajustement (414) pour régler une pression de sortie, une coiffe d'ajustement filetée (500) en contact physique avec une extrémité distale dudit ressort d'ajustement, dans lequel ladite coiffe d'ajustement est formée pour inclure une pluralité de logements de clavette (510, 512) en son sein ;
la fixation libérable audit régulateur de pression distant d'un outil d'ajustement de régulateur de pression (100) comprenant un manomètre (130), une molette d'ajustement rotative (120), et un piston d'ajustement mobile et rotatif (114) comprenant une pluralité de clavettes d'alignement (160, 162) disposées sur une extrémité distale de celui-ci, dans lequel ladite molette d'ajustement rotative est couplée audit piston d'ajustement mobile et rotatif, et dans lequel chacune parmi ladite pluralité de clavettes d'alignement est disposée de façon amovible au sein d'un différent parmi ladite pluralité de logements de clavette ;
la fixation d'une source d'entrée de gaz sous pression à une pièce de queue (432) dudit régulateur de pression distant ;
l'observation d'une pression de sortie indiquée dudit régulateur de pression distant en utilisant ledit manomètre ;
la rotation de ladite molette d'ajustement dans une première direction ce qui amène ledit ressort d'ajustement à se comprimer et à augmenter ladite pression de sortie indiquée ; et
la rotation de ladite molette d'ajustement dans une deuxième direction opposée ce qui amène ledit ressort d'ajustement à s'allonger et à diminuer ladite pression de sortie indiquée.

7. Procédé selon la revendication 6, dans lequel ledit outil d'ajustement de régulateur de pression (100) comprend un deuxième logement (110) formé pour inclure un premier alésage (112) s'étendant à travers celui-ci, dans lequel ledit manomètre (130) est en communication fluidique avec ledit premier alésage.

8. Procédé selon la revendication 7, dans lequel ledit outil d'ajustement de régulateur de pression (100) comprend en outre un ensemble de relâchement de pression (140).

9. Procédé selon la revendication 8, dans lequel ledit ensemble de relâchement de pression (140) comprend en outre,
un troisième logement (141a) formé pour inclure une extrémité filetée et un deuxième alésage (142a) à travers celui-ci ; un deuxième ressort (144a) disposé au sein dudit deuxième alésage,
un joint statique (146a) disposé par-dessus une extrémité distale dudit deuxième alésage ;
une tige poussoir (148a) s'étendant à travers ledit joint statique et en contact physique avec ledit deuxième ressort ; et
un bouton (149a) fixé à une extrémité distale de ladite tige poussoir, dans lequel ledit bouton peut être déplacé vers l'intérieur pour relâcher la pression dudit outil d'ajustement de régulateur de pression (100).

10. Procédé selon la revendication 7, dans lequel :
ledit piston d'ajustement (114) est formé pour inclure une ouverture filetée (115) s'étendant vers l'intérieur à partir d'une extrémité proximale de celui-ci ;
ladite molette d'ajustement (120) comprend en outre une tige filetée s'étendant vers l'extérieur à partir de celle-ci ;
ladite tige filetée (122) s'accouple à ladite ouverture filetée ;
une rotation de ladite molette d'ajustement dans une première direction amène ledit piston d'ajustement à tourner et à se déplacer vers le bas dans ledit premier alésage (112) et comprimant ledit ressort d'ajustement dans ledit régulateur de pression distant (200) ; et
une rotation de ladite molette d'ajustement dans une deuxième direction opposée amène ledit piston d'ajustement à se déplacer vers le haut dans ledit premier alésage et à allonger ledit ressort d'ajustement dans ledit régulateur de pression distant.

11. Procédé selon la revendication 6, comprenant la rotation progressive de la molette d'ajustement (120) dans la première direction pour augmenter progressivement la pression de sortie indiquée.

12. Procédé selon la revendication 6, comprenant la rotation progressive de la molette d'ajustement (120) dans la deuxième direction opposée pour diminuer progressivement la pression de sortie indiquée.
